# EUROPÄISCHE PATENTSCHRIFT

(11) **EP 0 561 111 B1**
(45) Veröffentlichungstag und Bekanntmachung des Hinweises auf die Patenterteilung: **12.03.1997**
(21) Anmeldenummer: 93100322.2
(22) Anmeldetag: 12.01.1993
(51) Int. Cl.: C08L 67/02, C08K 5/16

(54) **Schlagzähe Polyesterformmassen mit niedriger Schmelzviskosität.**
Impact resistant polyester moulding compositions of low melt viscosity.
Masses de moulage de polyester résistant aux chocs à viscosité reduite.

(30) Priorität: 16.03.1992 DE 4208314
(43) Veröffentlichungstag der Anmeldung: 22.09.1993
(73) Patentinhaber: HÜLS AKTIENGESELLSCHAFT, 45764 Marl (DE)
(72) Erfinder: Mügge, Joachim, Dr., W-4358 Haltern (DE); Beyer, Horst, W-4370 Marl (DE); Argast, Detlev, W-4630 Bochum 7 (DE); Schüler, Ralf, Dr., W-4350 Recklinghausen (DE)

(56) Entgegenhaltungen:
- EP-A- 0 152 028
- EP-A- 0 383 058
- DE-A- 1 669 446
- Gächter/Müller, "Kunststoff-Additive", 3. Ausgabe, S. 96, 97, 212, 269.

## Beschreibung

Gegenstand der Erfindung sind thermoplastische Formmassen enthaltend hochmolekulare, lineare Polyester und kautschukelastische Polymerisate, die funktionelle Gruppen tragen, die sich mit Polyester umsetzen können.

Die genannten Formmassen sind bekannte und bewährte Konstruktionswerkstoffe, die sich nach dem Spritzgieß-, Extrusions- oder Pultrusionsverfahren verarbeiten lassen.

Es ist bekannt, Polyester mit zähen Elastomeren bzw. mit thermoplastischen Polyolefinen zu vermischen (US-A 4 172 859, EP-A 274 744 und 275 141). Eine andere Möglichkeit der Modifizierung von Polyestern besteht in der Einarbeitung von Kern/Schale-Polymerisaten (DE-A 27 26 256, 28 35 653, 37 28 685, 38 03 458), auch von solchen, die gegenüber Polyester reaktive Gruppen tragen (DE-A-2 650 870).

Die bisherigen Lösungsvorschläge führen zwar zum Teil zu guten Zähigkeiten, jedoch ist die Viskosität dieser Formmassen in der Schmelze unerwünscht hoch. Aufgabe der vorliegenden Erfindung war es, Formmassen auf Basis von Polyestern und kautschukelastischen Polymerisaten mit hoher Zähigkeit bei gleichzeitig guten Fließeigenschaften in der Schmelze zur Verfügung zu stellen.

Die Aufgabe wird durch Formmassen gelöst, die

### C. 0,001 bis 1 Gew.-% einer aprotischen, basischen Stickstoffverbindung enthalten.

Als aprotische basische Stickstoffverbindungen (Komponente C.) seien beispielsweise Trialkylamine, N,N-(Dialkylamino)pyridine, Dialkylimidazole - jeweils mit 1 bis 6 C-Atomen im Alkylrest; Piperazine; cyclische oder bicyclische Amidine (DE-OS 17 20 633) genannt.

Im einzelnen genannt seien Triethylamin, Tributylamin; N-Methylmorpholin, N-Ethyl-morpholin; N,N-Dimethylcyclohexylamin, N,N-Dimethylbenzylamin; N,N,N',N'-Tetramethylethylendiamin, Pentamethyl-diethylentriamin; 1,4-Diaza[2.2.2]-bicyclooctan; Bis(dimethylaminoalkyl)-piperazine (DE-OS 26 36 787). Ferner kommen Verbindungen in Frage, wie sie in Angew. Chem. **90**, 602 - 615 (1978) und Chem. Soc. Rev. **12**, 129 - 164 (1983) beschrieben werden.

Bevorzugt eingesetzt werden z. B. Tributylamin, N,N,-Di(methylamino)pyridin, Diethylimidazol, Piperazin, 1,4-Diazabicyclo-[2.2.2]-octan.

Als aprotische basische Stickstoffverbindungen werden solche Stickstoffverbindungen bezeichnet, die keine direkte Bindung zwischen dem Stickstoff- und Wasserstoffatom aufweisen.

Die Komponente C. ist in der erfindungsgemäßen Formmasse zu 0,001 bis 1 Gew.-%, vorzugsweise zu 0,01 bis 0,2 Gew.-% enthalten.

Die hochmolekularen, linearen Polyester (Komponente A.) weisen nachstehende Grundstruktur auf: 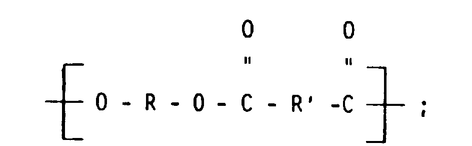 dabei stellt R einen divalenten verzweigten oder nichtverzweigten aliphatischen und/oder cycloaliphatischen Rest mit 2 bis 12, vorzugsweise 2 bis 8, C-Atomen in der Kohlenstoffkette und R' einen divalenten aromatischen Rest mit 6 bis 20, vorzugsweise 8 bis 12, C-Atomen im Kohlenstoffgerüst dar.

Als Beispiel für Diole seien Ethylenglykol, Trimethylenglykol, Tetramethylenglykol, Hexamethylenglykol, Neopentylglykol, Cyclohexandimethanol o.ä. genannt.

Bis zu 25 Mol-% des genannten Diols können durch ein zweites, bereits oben genanntes Diol oder durch ein Diol mit nachstehender allgemeiner Formel 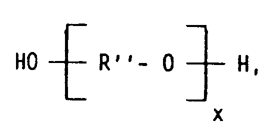 wobei R'' einen zweiwertigen Rest mit 2 bis 4 C-Atomen bedeutet und x einen Wert von 2 bis 50 annehmen kann, ersetzt sein.

Als aromatische Dicarbonsäuren kommen z. B. Terephthalsäure, Isophthalsäure, 1,4-, 1,5-, 2,6- bzw. 2,7-Naphthalindicarbonsäure, Diphensäure, Diphenylether-4,4'-dicarbonsäure o. ä. in Frage.

Bis zu 20 Mol-% dieser Dicarbonsäuren können durch aliphatische Dicarbonsäuren wie z.B. Bernsteinsäure, Maleinsäure, Fumarsäure, Sebacinsäure, Dodecandisäure u. a. ersetzt sein.

Die Herstellung der hochmolekularen, linearen Polyester gehört zum Stand der Technik (DE-OSS 24 07 155, 24 07 156; **Ullmanns Encyclopädie der technischen Chemie**, Verlag Chemie GmbH, Weinheim (1980), 4. Aufl., Bd. 19, Seite 65 ff.).

Die Viskositätszahlen (J-Werte) der Polyester liegen im Bereich von 80 bis 240 cm³/g, vorzugsweise im Bereich von 100 bis 180 cm³/g.

Geeignete Komponenten B. können sein Pfropfcopolymere auf Basis von:
- Ethylen/Propylen-, Ethylen/Propylen/Dien-Copolymeren; Poly-transoctenylen; Styrol/Butadien/Styrol-, Styrol/Ethylen/Butylen/Styrol-, Styrol/Ethylen/Propylen-, Styrol/Isopren/Styrol-Blockcopolymeren; Butadien-, Styrol/Butadien-, Butadien/Acrylnitril-, Butadien/Acrylat-, Acrylat-, Styrol/Acrylat-Kautschuk; Ethylen/α-Olefin-Copolymeren.

Zur Pfropfung geeignete ungesättigte Monomere sind z.B. (Meth)acrylsäure, Maleinsäure(anhydrid), Fumarsäure, Norbornendicarbonsäureanhydrid, Itaconsäure(anhydrid) sowie die entsprechenden Methyl-, Ethyl- und Butylester der Säuren. Wesentlich ist, daß die aufzupfropfenden Monomeren eine funktionelle Gruppe aufweisen, die sich mit den Polyestern umsetzt.

Erfahrungsgemäß ist es ausreichend, 0,2 bis 5 Gew.-%, vorzugsweise 0,5 bis 4 Gew.-% ungesättigtes Monomer - bezogen auf das zu modifizierende kautschukelastische Polymerisat - einzusetzen.

Die Herstellung derartiger Pfropfcopolymere ist z. B. aus DE-A 24 01 149 bzw. EP-A 0 173 380, 0 255 067, 0 255 184, 0 261 748, 0 278 022, 0 333 414 bekannt.
- Copolymerisate mit der allgemeinen Formel

   a₍ₙ₎ - b₍ₘ₎ - c₍ₒ₎ - d₍ₚ₎ - e_{(q)}

   mit der Bedeutung für
   - a =: - CH₂ - CH₂ -
   - b =: 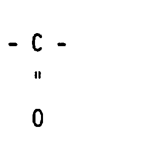
   - c =: 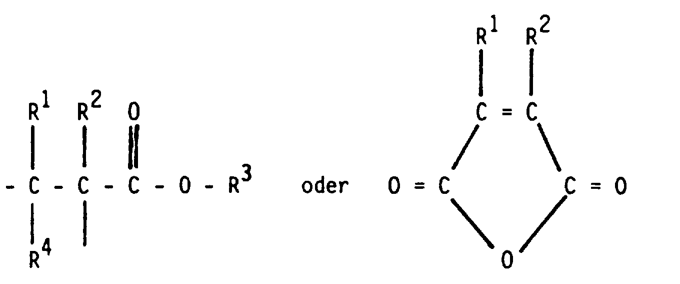 R¹, R²: unabhängig voneinander - H, - CH₃, - C₂H₅
   R³ : Alkyl-, Cycloalkyl- oder Arylrest mit bis zu 10 C-Atomen
   R⁴ : - H, Alkyl-, Cycloalkyl-, Aryl oder Carboxyozy-alkyl-Rest mit bis zu 10 C-Atomen
   - d =: 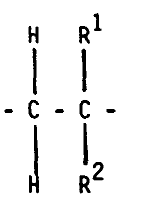 R¹, R², R³: unabhängig voneinander - H, Alkyl-, Cycloalkyl-Rest mit bis zu 10 C-Atomen
   R⁴: Einfachbindung, Alkyl-, Cycloalkyl-, Aryl-, Alkyl-oxy-alkyl-, Cycloalkyl-oxy-alkyl, Alkyloxy-cycloalkyl-Rest mit bis zu 12 C-Atomen
   - e =: 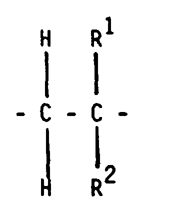 R¹: - H, - CH₃
   R²: - OH, -O-(CO)-R³, -(CO)-O-R⁴, - C = N
   R³: Alkylrest mit bis zu 6 C-Atomen
   R⁴: - H, Alkyl-, Cycloalkyl- oder Arylrest mit bis zu 10 C-Atomen
   wobei (n) - (q) die Molenbrüche der Komponenten a bis e darstellen und Zahlenwerte im Bereich
   (n) = >0 bis 0,95
   (m) = 0 bis 0,3
   (o) = >0 bis 0,5
   (p) = 0 bis 0,5
   (q) = 0 bis 0,8
annehmen können.
- Beispiele für c sind:: Maleinsäureanhydrid, Maleinsäuremonoethylester, Fumarsäure, Fumarsäuredibutylester, Itaconsäure, Acrylsäure.
- Beispiele für d sind:: Glycidylacrylat, Glycidylmethacrylat, Allylglycidylether.
- Beispiele für e sind:: Methyl(meth)acrylat, Butylacrylat, Ethylacrylat, Acrylnitril, Vinylacetat.

Wesentlich ist, daß diese Copolymerisate Reste aus copolymerisierten Monomeren enthalten, die funktionelle Gruppen aufweisen, die sich mit Polyester umsetzen können.

Die Herstellung dieser Ethylencopolymerisate wird z. B. in US 4 172 859 beschrieben.

Die Stoffe der Komponente B. weisen ein Molekulargewicht in der Größe von > 10 000, vorzugsweise von > 100 000 auf.

Die erfindungsgemäßen Formmassen bestehen zu 99 bis 40 Gew.-%, vorzugsweise zu 95 bis 60 Gew.-%, aus Komponente A. und zu 1 bis 60 Gew.-%, vorzugsweise zu 5 bis 40 Gew.-%, aus Komponente B.

Die Formmassen können zusätzlich weitere Zusatzstoffe, wie z. B. Verstärkungs- und Flammschutzmittel, Pigmente, Oligo- und Polymere, Antistatika, Stabilisatoren oder Verarbeitungshilfsmittel, enthalten. Der Anteil der Verstärkungsmittel kann bis zu 50 Gew.-%, der der Flammschutzmittel bis zu 15 Gew.-% und der aller übrigen Zusatzstoffe insgesamt bis zu 5 Gew.-%, jeweils bezogen auf die gesamte Formmasse, betragen.

Als Verstärkungsmittel eignen sich insbesondere Glas- und Kohlenstoffasern.

Als Flammschutzmittel sind vorzugsweise halogenfreie Stoffe wie aromatische Phosphorverbindungen, z.B. Triphenylphosphinoxid und Triphenylphosphat; Melamincyamiate; roter Phosphor, geeignet. Es kann auch ein übliches halogenhaltiges Flammschutzmittel verwendet werden. In Frage kommen dabei organische Verbindungen, wie sie z.B. in der Monographie von H. Vogel **Flammfestmachen von Kunststoff**, Hüthig-Verlag (1966) auf den Seiten 94 bis 102, beschrieben werden.

Im Falle des Einsatzes von halogenhaltigen Flammschutzmitteln empfiehlt es sich, einen Synergisten zu verwenden. Geeignet sind Verbindungen des Antimons, Bors und des Zinns. Diese werden im allgemeinen in Mengen von 0,5 bis 10 Gew.%, bezogen auf die Formmassen, eingesetzt.

Geeignete Stabilisatoren umfassen z. B. organische Phosphite, wie Didecylphenylphosphit und Trilaurylphosphit, sterisch gehinderte Phenole sowie Tetramethylpiperidin, Benzophenon- und Triazolderivate.

Als Verarbeitungshilfsmittel kommen z. B. Wachse, wie oxidierte Kohlenwasserstoffe sowie ihre Alkali- und Erdalkalisalze, in Frage.

Die Herstellung der Formmassen erfolgt zweckmäßigerweise durch Mischen der Komponenten in der Schmelze bei Temperaturen im Bereich von 150 °C bis 350 °C in üblichen Mischvorrichtungen, wie z.B. Knetern oder Extrudern. Die untere Temperaturgrenze wird in der Regel durch den Schmelzpunkt des hochmolekularen, linearen Polyesters bestimmt, die obere Temperaturgrenze durch auftretende Zersetzungs- und Abbaureaktionen der Komponenten A., B. und/oder C. Es hat sich als günstig herausgestellt, ca. 20 °C oberhalb des Schmelzpunktes der Komponente A. zu arbeiten.

Die Komponente C. wird vor dem Schmelzemischen auf eine Vormischung aus den Komponenten A. und/oder B. aufgetragen. Es ist auch möglich, die Komponente C. in einem inerten organischen Lösungsmittel zu lösen und diese Lösung auf eine Vormischung aus den Komponenten A. und/oder B. aufzutrommeln. Es hat sich als besonders günstig erwiesen, die Komponente C. nur auf die Komponente B. aufzubringen.

Die erhaltenen Formmassen lassen sich mit den für die Thermoplastverarbeitung üblichen Verfahren, wie z.B. Spritzgießen und Extrudieren, zu Formkörpern verarbeiten.

Mit Hilfe der Erfindung gelingt es, Formmassen zur Verfügung zu stellen, die bei sehr guten Zähigkeitseigenschaften eine deutlich verringerte Viskosität in der Schmelze aufweisen.

Beispiele für technische Anwendungsgebiete sind z. B. Rohre, Platten, Gehäuse und sonstige technische Artikel für den Automobil-, Sport-, Elektro- und Feinwerksektor.

Die **Bestimmung der Lösungsviskosität** (Viskositätszahl J) **der Polyester** erfolgt in einer 0,5 Gew.-%igen o-Dichlorbenzol/Phenol-Lösung (Gewichtsverhältnis: 50 : 50) bei 25 °C (DIN 53 728/ISO 1628).

Die **Bestimmung der Lösungsviskosität** (J-Wert) **des Polyoctenylens** erfolgt in einer 0,5 Gew.-%igen Toluol-Lösung bei 25 °C. Die Lösung wird dabei 2 Std. im Wärmeschrank getempert und über Nacht bei Raumtemperatur geschüttelt (DIN 51 562 Teil I)

Die **Bestimmung der Schmelzeviskosität** erfolgt in einem Hochdruck-Kapillar-Rheometer mit einer Vollkreiskapillare (Düsenlänge: 60 mm, Düsendurchmesser: 1,5 mm). Die Meßtemperatur beträgt 250 °C, die Schergeschwindigkeit wird auf 100 s⁻¹ eingestellt. Die Formmassen werden vor der Messung 15 Stunden im Vakuum bei 70 °C getrocknet.

Die **Kerbschlagzähigkeit (a**_{**K**}**)** wird an bei 260 °C gespritzten IZOD-Stäben geprüft (ISO 180 - Verfahren 1A).

Die **Reißdehnung (ε**_{**R**}**)** wird an bei 260 °C gespritzten Schulterstäben bestimmt (DIN 53 455).

Der **Elastizitätsmodul** (Zug-E-Modul) wird an bei 260 °C hergestellten Zugstäben bestimmt (DIN 53 457).

Die mit Buchstaben gekennzeichneten Beispiele sind nicht erfindungsgemäß.

### Beispiele

### Folgende Komponenten werden verwendet:

### Komponente A

- **A 1:**: Homobutylenterephthalat (J = 110 cm³/g)
- **A 2:**: Copolyester aus 42,5 mol-% Terephthalsäure, 7,5 mol-% Dodecandisaure und 50 mol-% Butandiol (J = 106 cm³/g).

### Komponente B

- **B 1:**: Ethylen/Propylen-Copolymerisat, gepfropft mit 0,7 Gew.-% MSA (EXXELOR^{R} VA 1803 - Fa. EXXON)
- **B 2:**: Styrol/Ethylen/Butylen/Styrol-Blockcopolymerisat, gepfropft mit 2 Gew.-% MSA (KRATON^{R} FG 1901 X - Fa. SHELL).
- **B 3:**: Poly-trans-octenamer (VESTENAMER^{R} 8012 - Fa. Hüls), gepfropft mit 0,8 Gew.-% MSA (J = 111 cm³/g; Gelgehalt: < 1 Gew.-%).
- **B 4:**: Ethylen/Ethylacrylat/Maleinsäureanhydrid-Copolymerisat (LOTADER 4700 - Fa. ORKEM).
- **B 5:**: Kern/Schale-Polymerisat mit einem vernetzten Butadien-Kautschuk-Kern und einer harten Schale aus einem Methylmethacrylat/Styrol-Copolymerisat (PARALOID EXL 3607 - Fa. RÖHM und Haas).

### Komponente C

- **C 1:**: N,N-(Dimethylamino)pyridin.
- **C 2:**: 1,4-Diazabicyclo-[2,2,2]-octan.

### Versuch 1 - 10 und Vergleichsversuche A - F

Die Herstellung der Formmassen erfolgte auf einem Doppelwellenextruder Berstorff ZE 25 x 33 D bei 240 °C Zylindertemperatur, einer Schneckendrehzahl von 150 min⁻¹ und einem Massedurchsatz von 8 kg/h. Hierbei wurde die Komponente C. in ca. dem 20-fachen (bezogen auf das Gewicht) in Toluol aufgelöst und auf die Komponente B. aufgezogen.

Die Zusammensetzung der einzelnen Formmassen kann den Tabellen 1 a und 1 b entnommen werden.

**Tabelle 1 a**

| **Versuch Komponente** | **1** | **2** | **3** | **4** | **5** | **6** | **7** | **8** | **9** | **10** |
|---|---|---|---|---|---|---|---|---|---|---|
| A 1 | 80 | 80 | 80 | 80 | 80 | | 80 | 80 | 80 | 80 |
| A 2 | | | | | | 80 | | | | |
| | | | | | | | | | | |
| B 1 | 20 | 20 | 20 | 20 | 20 | 20 | 20 | | | |
| B 2 | | | | | | | | 20 | | |
| B 3 | | | | | | | | | 20 | |
| B 4 | | | | | | | | | | 20 |
| | | | | | | | | | | |
| C 1 | 0,005 | 0,01 | 0,015 | 0,02 | 0,04 | 0,02 | | 0,02 | | |
| C 2 | | | | | | | 0,02 | | 0,02 | 0,02 |

**Tabelle 1 b**

| **Vergleichsversuch Komponente** | **A** | **B** | **C** | **D** | **E** | **F** |
|---|---|---|---|---|---|---|
| A 1 | 80 | 75 | | 80 | 80 | 80 |
| A 2 | | | 80 | | | |
| | | | | | | |
| B 1 | 20 | | 20 | | | |
| B 2 | | | | 20 | | |
| B 3 | | | | | 20 | |
| B 4 | | | | | | 20 |
| B 5 | | 25 | | | | |
| | | | | | | |
| C 1 | - | - | - | - | - | - |
| C 2 | - | - | - | - | - | - |

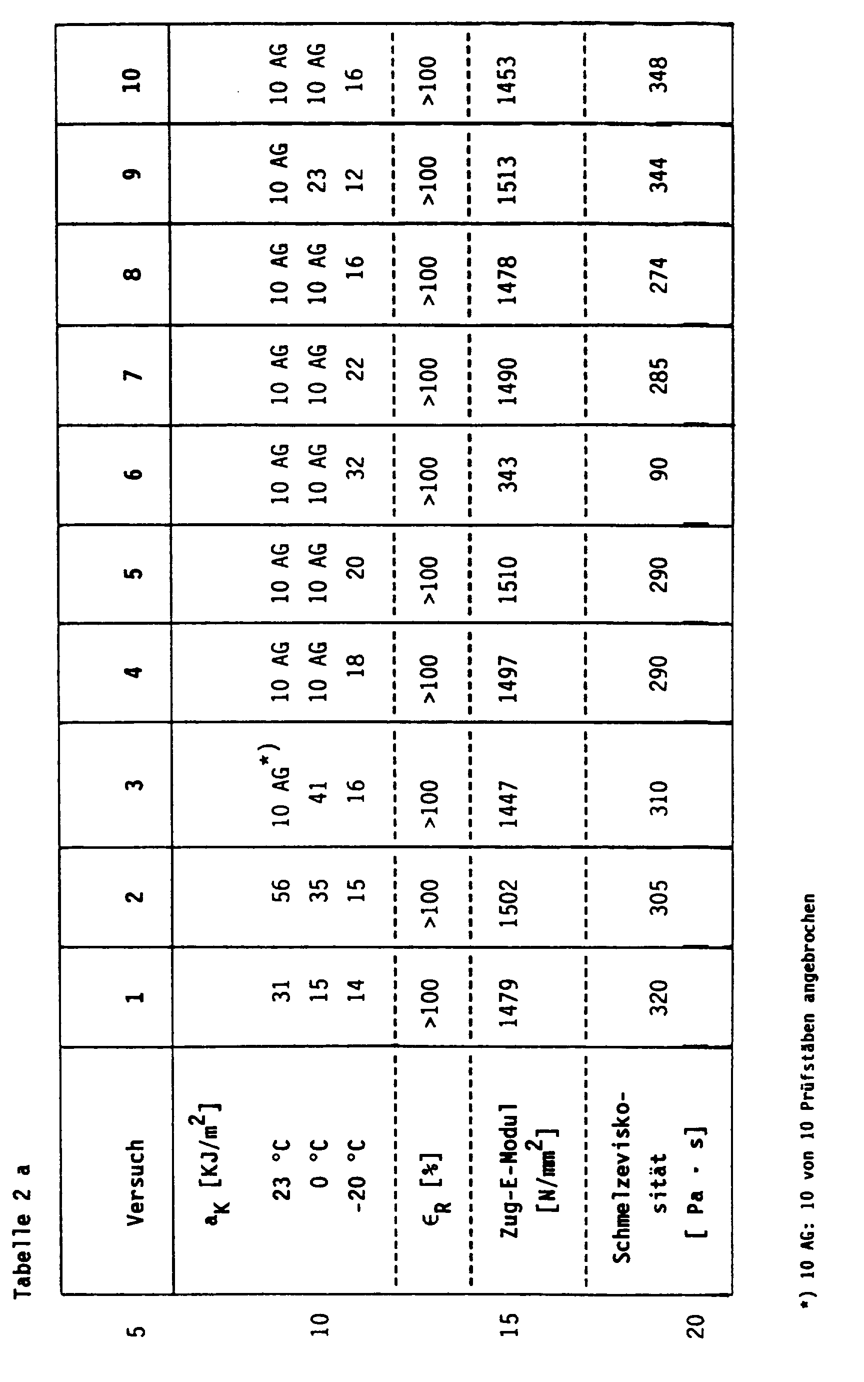

**Tabelle 2 b**

| **Vergleichsversuch** | **A** | **B** | **C** | **D** | **E** | **F** |
|---|---|---|---|---|---|---|
| **a**_{**K**} **[KJ/m**^{**2**}**]** | | | | | | |
| | | | | | | |
| **23 °C** | 10 | 10 AG^{*)} | 12 | 9 | 11 | 9 |
| **0 °C** | 10 | 22 | 12 | 8 | 9 | 8 |
| **-20 °C** | 9 | 19 | 12 | 7 | 7 | 8 |
| **ε**_{**R [%]**} | >100 | 60 | >100 | >100 | 46 | 58 |
| **Zug-E-Modul [N/mm**^{**2**}**]** | 1528 | 1432 | 329 | 1429 | 1630 | 1420 |
| **Schmelzeviskosität [Pa · s]** | 340 | 1200 | 96 | 310 | 360 | 378 |

| | | | | | | |
|---|---|---|---|---|---|---|
| *) 10 AG: 10 von 10 Prüfstäben angebrochen | | | | | | |

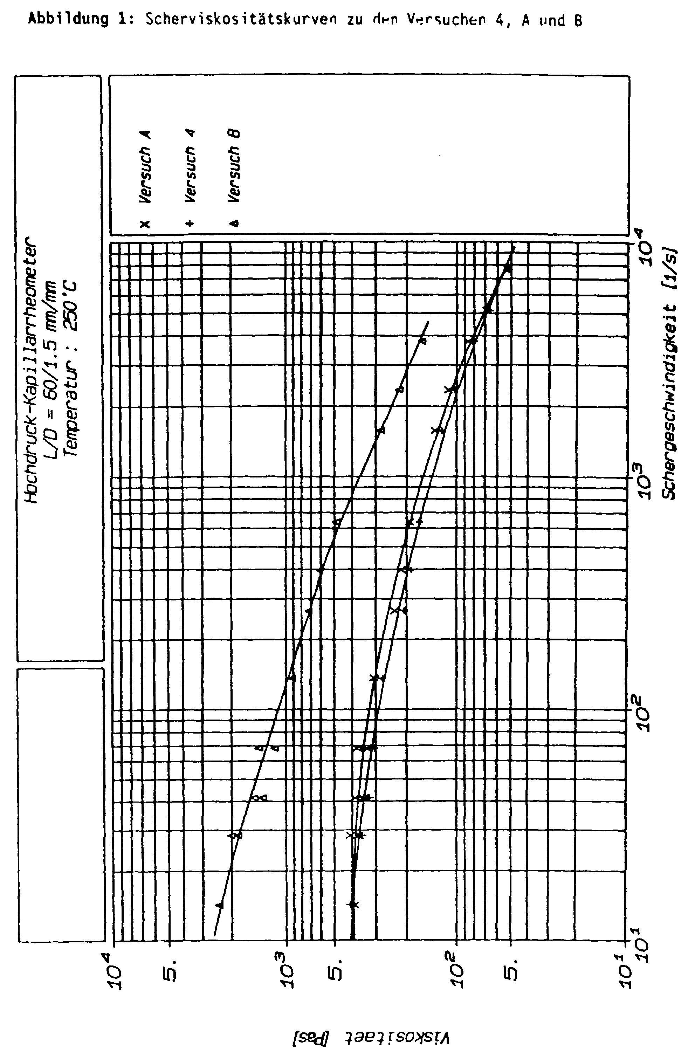

## Patentansprüche

1. Thermoplastische Formmasse, enthaltend
A. einen hochmolekularen, linearen Polyester sowie
B. ein kautschukelastisches Polymerisat, das funktionelle Gruppen trägt, die sich mit Polyester umsetzen können,
dadurch gekennzeichnet,
daß die Formmasse
C. 0,001 bis 1 Gew.-% einer aprotischen basischen Stickstoffverbindung
enthält.

2. Formmasse nach Anspruch 1,
dadurch gekennzeichnet,
daß sie 0,01 bis 0,2 Gew.-% der basischen Stickstoffverbindung enthält.

3. Formmasse nach Anspruch 1 und 2,
dadurch gekennzeichnet,
daß die Stickstoffverbindung aus der Gruppe der Trialkylamine, N,N-(Dialkylamino)pyridine oder Dialkylimidazole - jeweils mit 1 bis 6 C-Atomen im Alkyl-Rest; Piperazine; cyclischen oder bicyclischen Amidine ausgewählt ist.

4. Formmasse nach den Ansprüchen 1 bis 3,
dadurch gekennzeichnet,
daß als Stickstoffverbindung Tributylamin, N,N-(Dimethylamino)pyridin oder 1,4-Diazabicyclo[2.2.2]octan eingesetzt wird.

5. Verwendung der Formmasse nach den Ansprüchen 1 bis 4 für die Herstellung von Formkörpern.

## Claims

1. A thermoplastic moulding material containing
A. a high molecular weight, linear polyester and
B. an elastomeric polymer which carries functional groups capable of reacting with polyesters,
characterized in that the moulding material contains
C. from 0.001 to 1 % by weight of an aprotic basic nitrogen compound.

2. A moulding material according to claim 1, characterized in that it contains from 0.01 to 0.2 % by weight of the basic nitrogen compound.

3. A moulding material according to either of claims 1 and 2, characterized in that the nitrogen compound is selected from the group consisting of the trialkylamines, N,N-(dialkylamino)pyridines or dialkylimidazoles - in each case having from 1 to 6 carbon atoms in the alkyl radical; piperazines; cyclic or bicyclic amidines.

4. A moulding material according to any of claims 1 to 3, characterized in that tributylamine, N,N-(dimethylamino)pyridine or 1,4-diazabicyclo[2.2.2]octane is used as the nitrogen compound.

5. Use of the moulding material according to any of claims 1 to 4 for the production of mouldings.

## Revendications

1. Mélange à mouler thermoplastique, contenant
A. un polyester linéaire à grande masse moléculaire, et
B. un polymère ayant l'élasticité du caoutchouc, qui comporte des groupes fonctionnels pouvant réagir avec le polyester,
caractérisé en ce que le mélange à mouler contient
C. de 0,001 à 1 % en poids d'un composé azoté basique aprotique.

2. Mélange à mouler selon la revendication 1, caractérisé en ce qu'il contient de 0,01 à 0,2 % en poids du composé azoté basique.

3. Mélange à mouler selon les revendications 1 et 2, caractérisé en ce que le composé azoté est choisi dans le groupe des trialkylamines, des N,N-(dialkylamino)pyridines ou des dialkylimidazoles, le fragment alkyle ayant dans tous les cas de 1 à 6 atomes de carbone ; les pipérazines ; les amidines cycliques ou bicycliques.

4. Mélange à mouler selon les revendications 1 à 3, caractérisé en ce qu'on utilise comme composé azoté la tributylamine, la N,N-(diméthylamino)pyridine ou le 1,4-diazabicydo[2.2.2]octane.

5. Utilisation du mélange à mouler selon les revendications 1 à 4 pour fabriquer des objets moulés.
